# EUROPÄISCHE PATENTANMELDUNG

(11) **EP 1 923 567 A2**
(43) Veröffentlichungstag der Anmeldung: **21.05.2008**
(21) Anmeldenummer: 07017174.9
(22) Anmeldetag: 01.09.2007
(51) Int. Cl.: F03D 1/06

(54) **Rotorblatt und Windkraftanlage**

(30) Priorität: 15.11.2006 DE 102006053712
(71) Anmelder: Nordex Energy GmbH, 22848 Norderstedt (DE)
(72) Erfinder: Rochholz, Hermann, Dr.-Ing., 22848 Norderstedt (DE)
(74) Vertreter: Schildberg, Peter

(57) **Zusammenfassung**

Die Erfindung betrifft ein Rotorblatt (1) für eine Windkraftanlage, mit einer Blattwurzel (1a), mit einem von der Blattwurzel (1a) ausgehenden ersten Längsabschnitt (I), mit einem an den ersten Längsabschnitt (I) anschließenden, in eine Blattspitze (2) mündenden zweiten Längsabschnitt (II), mit einer ersten, einem Turm der Windkraftanlage im montierten Zustand zugewandten Oberfläche (S1) und einer zweiten, von dem Turm der Windkraftanlage im montierten Zustand abgewandten Oberfläche (S2), wobei eine gedachte Bezugsebene (B) aufgespannt ist durch eine im Betrieb des Rotorblatts (1) erfolgende Rotation der Längsachse (3) des ersten Längsabschnitts (I) um die Drehachse eines das Rotorblatt tragenden Rotors der Windkraftanlage. Die Aufgabe, ein Rotorblatt bereitzustellen, das bei einer auch bei starken Winden sicheren Vermeidung von Kollisionen der Blattspitze (2) mit dem Turm der Windkraftanlage eine erhöhte Effizienz aufweist, und bei dem die im Betrieb auftretenden Momente um die Blattlängsachse verringert sind, löst die Erfindung dadurch, dass die erste Oberfläche (S1) im Bereich des zweiten Längsabschnitts (II) entlang einer gedachten Konusebene (K) verläuft, die durch eine im Betrieb erfolgende Rotation der ersten Oberfläche (S1) im Bereich des zweiten Längsabschnitts (II) um die Drehachse eines das Rotorblatt tragenden Rotors aufgespannt ist, wobei die Konusebene (K) unter einem Winkel (α) die Bezugsebene (B) schneidet, dass der Abstand (A) zwischen der ersten Oberfläche (S1) und der Bezugsebene (B) entlang des zweiten Längsabschnitts (II) in Richtung der Blattspitze (2) linear zunimmt und, dass der zweite Längsabschnitt (II) länger ist als der erste Längsabschnitt (I). Außerdem betrifft die Erfindung eine Windkraftanlage.

## Beschreibung

Die vorliegende Erfindung betrifft ein Rotorblatt für eine Windkraftanlage, mit einer Blattwurzel, mit einem von der Blattwurzel ausgehenden ersten Längsabschnitt, mit einem an den ersten Längsabschnitt anschließenden, in eine Blattspitze mündenden zweiten Längsabschnitt, mit einer ersten, einem Turm der Windkraftanlage im montierten Zustand zugewandten Oberfläche und einer zweiten, von dem Turm der Windkraftanlage im montierten Zustand abgewandten Oberfläche, wobei eine gedachte Bezugsebene aufgespannt ist durch eine im Betrieb des Rotorblatts erfolgende Rotation der Längsachse des ersten Längsabschnitts um die Drehachse eines das Rotorblatt tragenden Rotors der Windkraftanlage.

Außerdem betrifft die Erfindung eine Windkraftanlage mit einem Turm und einer auf dem oberen Ende des Turms vorgesehenen Gondel mit einem um eine Drehachse drehbar gelagerten, mindestens eine Rotornabe aufweisenden Rotor.

Rotorblätter moderner Windkraftanlagen weisen eine beträchtliche Größe auf, so dass zur Sicherung einer ausreichenden Stabilität der Anlage Blätter mit einem möglichst geringen Gewicht bevorzugt werden. Diese Anforderung führt dazu, dass die Rotorblätter eine Elastizität aufweisen, die im Betrieb der Anlage je nach Stärke des angreifenden Winds zu einer Durchbiegung der Rotorblätter führen kann.

Insbesondere bei sogenannten Vorderläufer-Anlagen, bei denen der Wind zuerst auf die Rotorblätter und dann auf den Turm der Anlage trifft, muß auch bei durchgebogenen Rotorblättern gewährleistet sein, daß der Abstand zwischen Blattspitze mit Turm ausreicht. Um dies sicher zu verhindern, kann der Abstand zwischen dem die Blätter tragenden Rotor und dem Turm vergrößert werden. Auf diese Weise wird der Abstand zwischen den Blattspitzen und dem Turm, der sogenannte Turmfreigang, vergrößert. Diese Maßnahme hat verschiedene Nachteile, die eine entsprechend aufwändige Dimensionierung von Rotor und Anlage erforderlich machen.

Zur Lösung dieses Problems ist es aus der DE 298 80 145 U1 bekannt, die Rotorblätter so auszubilden, dass sie sich von der Rotornabe nach außen zunächst in einer Normal-Ebene und dann in Abstand von der Nabe in einer nach außen und nach vom gerichteten, gekrümmten Weise weiter erstrecken. Im Ergebnis kann diese gekrümmte Bauweise mit einer Materialeinsparung einhergehen, da weniger Steifigkeit benötigt wird. Durch diese Geometrie der Rotorblätter soll eine Kollision der Blattspitzen mit dem Turm auch bei starkem Wind sicher vermieden werden, indem sich die Rotorblätter bei Belastung zu einem geraden Verlauf zurückbiegen, aber niemals zu nahe an den Turm gelangen. Dabei ist die Krümmung der Rotorblätter aus ästhetischen Gründen im äußeren Bereich, beispielsweise entlang des äußeren Drittels der Blätter vorgesehen.

Aus der DE 201 20 324 U1 ist weiterhin ein Rotorblatt bekannt, bei dem im nicht-belasteten Zustand der Abstand der im Betrieb am weitesten nach Luv weisenden Punkte der Blattunterseite von der Blattachse an jeder Stelle des Rotorblatts mindestens so groß ist wie an der Blattwurzel. Während die dem Turm im Betrieb abgewandte Seite dieses Rotorblatts im Wesentlichen gerade ausgebildet ist, weist die dem Turm im Betrieb zugewandte Seite des Blatts eine Krümmung auf. Durch diese Ausgestaltung soll auch bei einer vom Wind verursachten extremen Durchbiegung des Rotorblatts eine Kollision mit dem Turm ausgeschlossen sein.

Schließlich ist in der DE 10 2004 023 774 A1 ein Rotorblatt vorgeschlagen, das stumpfwinklig zu der Rotordrehachse vom Turm weg geneigt ausgerichtet an der Rotornabe angeordnet (Konuswinkel) und in mindestens einem Längenabschnitt gekrümmt zu der Längsachse ausgebildet ist. Durch die Kombination dieser beiden Maßnahmen sollen die mit dem alleinigen Einsatz der jeweiligen Maßnahmen verbundenen Nachteile vermieden werden, und es soll eine Kollision der Blattspitzen mit dem Anlagenturm auch bei starkem Wind ausgeschlossen werden. Bei dem bekannten Rotorblatt kann nach einem Bereich der Krümmung der Bereich der Blattspitze wiederum gerade ausgeführt sein.

Den aus dem Stand der Technik bekannten Rotorblättern und Windkraftanlagen ist der Nachteil gemein, dass aufgrund der jeweiligen Rotorblattgeometrie die Kontur auf der aerodynamisch wichtigen Saugseite des Blatts (bei Vorderläufern die zum Turm der Anlage weisende Seite) nur schwierig exakt ausgebildet werden kann. Dies führt zu einer verringerten Effizienz der Anlagen. Außerdem wirken bei den seit langem bekannten Rotorblättern und Windkraftanlagen im Betrieb hohe Momente um die Blattlängsachse und somit auf das Lager einer gegebenenfalls vorgesehenen Blattwinkeleinstellregelung (vgl. DE 201 20 324 U1).

Der Erfindung liegt daher die Aufgabe zugrunde, ein Rotorblatt und eine Windkraftanlage der eingangs genannten Art bereitzustellen, die bei einer auch bei starken Winden sicheren Vermeidung von Kollisionen der Blattspitze mit dem Turm der Windkraftanlage eine erhöhte Effizienz aufweisen, und bei denen die im Betrieb auftretenden Momente um die Blattlängsachse verringert sind.

Diese Aufgabe wird durch ein Rotorblatt gemäß Anspruch 1 gelöst. Erfindungsgemäß verläuft die erste Oberfläche des Rotorblatts im Bereich eines zweiten Längsabschnitts entlang einer gedachten Konusebene, die durch eine im Betrieb erfolgende Rotation der ersten Oberfläche im Bereich des zweiten Längsabschnitts um die Drehachse eines das Rotorblatt tragenden Rotors aufgespannt ist, wobei die Konusebene unter einem Winkel die Bezugsebene schneidet. Erfindungsgemäßen nimmt der Abstand zwischen der ersten Oberfläche und der Bezugsebene entlang dem zweiten Längsabschnitt in Richtung der Blattspitze linear zu, wobei der zweite Längsabschnitt länger ist als der erste Längsabschnitt.

Für die eingangs angegebene Windkraftanlage wird die Aufgabe dadurch gelöst, dass an der Rotornabe mindestens ein erfindungsgemäßes Rotorblatt angeordnet ist.

Die dem Turm zugewandte erste Oberfläche des Rotorblatts wird bei Vorder-Läufem auch als Saugseite bezeichnet, die dem Turm abgewandte zweite Seite als Druckseite.

Indem die durch eine Drehung des Rotorblatts im Bereich des zweiten Längsabschnitts aufgespannte Konusebene die Bezugsebene unter einem Winkel schneidet, ist der zweite Längsabschnitt erfindungsgemäß also von dem ersten Längsabschnitt vom Turm der Anlage weg abgeknickt. Das Profil der dem Turm zugewandten Oberfläche schmiegt sich an eine gedachte, linear verlaufende Tangentialebene an. Dabei nimmt der Abstand zwischen der dem Turm der Windkraftanlage zugewandten ersten Oberfläche und der Bezugsebene entlang des zweiten Längsabschnitts in Richtung der Blattspitze linear zu, das heißt im Gegensatz zu den bekannten gekrümmten Rotorblättern verläuft die erste Oberfläche in dem abgeknickten Bereich linear. Schließlich ist der zweite Längsabschnitt länger als der erste Längsabschnitt, so dass der größere Teil der dem Turm zugewandten ersten Oberfläche des Rotorblatts einen linear gegenüber der Bezugsebene und damit gegenüber dem Turm wachsenden Abstand aufweist.

Durch die erfindungsgemäße Ausgestaltung des Rotorblatts mit einem über den größeren Teil der Längserstreckung des Rotorblatts linear abgeknickten Bereich der ersten Oberfläche kann zum einen die aerodynamisch wichtige, dem Turm der Anlage zugewandte Saugseitenkontur exakt nach den Anforderungen hinsichtlich der Effizienz der Anlage gebaut werden. Die Effizienz der Anlage kann also gegenüber den bekannten Anlagen mit gekrümmten beziehungsweise nur über eine geringe Erstreckung linear abgeknickten Blättern erhöht werden. Zusätzlich ist es durch die erfindungsgemäße Ausgestaltung einer ausgedehnten linearen ersten Oberfläche möglich, die Konusebene so zu wählen, dass die auf eine Blattwinkeleinstellregelung wirkenden Pitch-Momente der Rotorblätter verringert sind. Eine Blattwinkeleinstellregelung ist damit geringeren Kräften ausgesetzt und kann entsprechend weniger aufwändig ausgestaltet sein.

Gleichzeitig wird aufgrund der Vorbiegung des Rotorblatts im zweiten Längsabschnitt sichergestellt, dass die Rotorblattspitze auch bei einer aufgrund sehr starker Windbelastung erfolgenden Verbiegung in Richtung des Turms nicht mit dem Turm kollidieren kann.

Der Abstand zwischen der ersten Oberfläche und der Bezugsebene wird erfindungsgemäß ausgehend von der Bezugsebene in einer von dem Turm der Windkraftanlage wegzeigenden Richtung gemessen, so dass die erste Oberfläche im Bereich nahe des ersten Längsabschnitts durchaus einen negativen Abstand von der Bezugsebene aufweisen kann, der dann zunächst bis auf Null und dann zu positiven Werten hin linear zunimmt.

Selbstverständlich kann bei dem erfindungsgemäßen Rotorblatt auch die dem Turm abgewandte zweite Oberfläche einen in Richtung der Blattspitze zunehmenden Abstand gegenüber der Bezugsebene aufweisen. Dieser kann sowohl linear anwachsen, bevorzugt wächst er jedoch gekrümmt an.

Die vorliegende Erfindung ist grundsätzlich für alle Arten von Rotornaben einsetzbar. Bevorzugt dient als Windkraftanlage ein Luvläufer.

Gemäß einer bevorzugten Ausgestaltung der Erfindung ist der Winkel, unter dem die Konusebene die Bezugsebene schneidet, ein spitzer Winkel. Dieser Aufbau berücksichtigt die Zentrifugalkräfte. Diese Ausgestaltung ermöglicht einen problemlosen Transport der Rotorblätter.

Gemäß einer weiteren Ausgestaltung der Erfindung kann die Länge des zweiten Längsabschnitts mehr als 60 % der Gesamtlänge des Rotorblatts betragen. Mit einer solchen Länge des zweiten Längsabschnitts lässt sich eine gute Konturgenauigkeit der Saugseitenkontur erreichen, wobei gleichzeitig die um die Blattlängsachse auftretenden Momente wirksam reduziert werden können.

Um eine noch vorteilhaftere Konturgenauigkeit der ersten Oberfläche und eine noch weitergehende Reduzierung der Momente um die Blattlängsachse zu erreichen, kann die Länge des zweiten Längsabschnitts etwa 75 % der Gesamtlänge des Rotorblatts betragen. In diesem Fall kann die Länge der ersten Längsabschnitts etwa 25 % der Gesamtlänge des Rotorblatts betragen.

Nach einer weiteren Ausgestaltung der Erfindung kann im Bereich der Blattspitze der Abstand zwischen der ersten Oberfläche des Rotorblatts und der Bezugsebene stärker zunehmen, als im Bereich des übrigen zweiten Längsabschnitts. Auf diese Weise ist es möglich, die in aerodynamischer Hinsicht wichtige Blattspitze besonders an die jeweiligen Betriebsanforderungen anzupassen, beispielsweise um unerwünschte LuftWirbel im Bereich der Blattspitze zu minimieren. Die Länge der Blattspitze kann dabei etwa 5 % der Gesamtlänge des Rotorblatts betragen. Sie bildet einen Teil des zweiten Längsabschnitts.

Um den Turmfreigang ohne unerwünschte Nebeneffekte weiter zu erhöhen, kann die Schnittlinie zwischen der Konusebene und der Bezugsebene in Längserstreckung des Rotorblatts gesehen in der der Blattwurzel zugewandten Hälfte des Rotorblatts liegen. Darüber hinaus kann auf diese Weise das Rotorblatt exakt an die aerodynamischen Anforderungen angepasst werden.

Bei dem Rotorblatt kann der Winkel zwischen der Längsachse des ersten Längsabschnitts und der Drehachse eines das Rotorblatt im Betrieb tragenden Rotors 90° betragen. In diesem Fall beschreibt der erste Längsabschnitt bei einer Drehung um die Drehachse des Rotors im Betrieb also keinen Konus, sondern eine Kreisfläche. Bei der erfindungsgemäßen Ausgestaltung des Rotorblatts kann diese Ausgestaltung in vielen Fällen ausreichend sein, um den erforderlichen Turmfreigang zu erreichen. Ein zusätzlicher Konus des ersten Längsabschnitts ist dann nicht erforderlich. Diese Ausgestaltung hat darüber hinaus den Vorteil, dass von dem Rotorblatt geringere Kräfte auf die Rotornabe ausgeübt werden als bei einem zusätzlichen Konus des ersten Längsabschnitts. Die Rotornabe und die Gondel können daher weniger aufwändig gestaltet sein.

Bei der erfindungsgemäßen Windkraftanlage kann - wie an sich bekannt - die Drehachse des Rotors gemäß einer weiteren Ausgestaltung gegenüber der Horizontalen einen Winkel aufweisen. In diesem Fall ist also der gesamte Rotor mit den Rotorblättern um einen Winkel gegenüber der Horizontalen verkippt. Die Verkippung erfolgt dabei derart, dass die Rotorblätter in ihrer unteren Rotationsposition einen größeren Abstand von der Ebene des Turms der Anlage besitzen als in ihrer oberen Rotationsposition.

Selbstverständlich ist je nach den Betriebsanforderungen auch eine Ausgestaltung der Anlage möglich, bei der zwischen der Drehachse des Rotors und der Horizontalen kein Winkel besteht.

Im Folgenden wird die Erfindung anhand einer ein Ausführungsbeispiel darstellenden Zeichnung näher erläutert. Es zeigen schematisch:
- Fig. 1: eine geschnittene Ansicht eines erfindungsgemäßen Rotorblatts,
- Fig. 2: eine Profilgeometrie des Rotorblatts nach Fig. 1 anhand von mehreren Querschnitten,
- Fig. 3: eine geschnittene Ansicht einer erfindungsgemäßen Windkraftanlage.

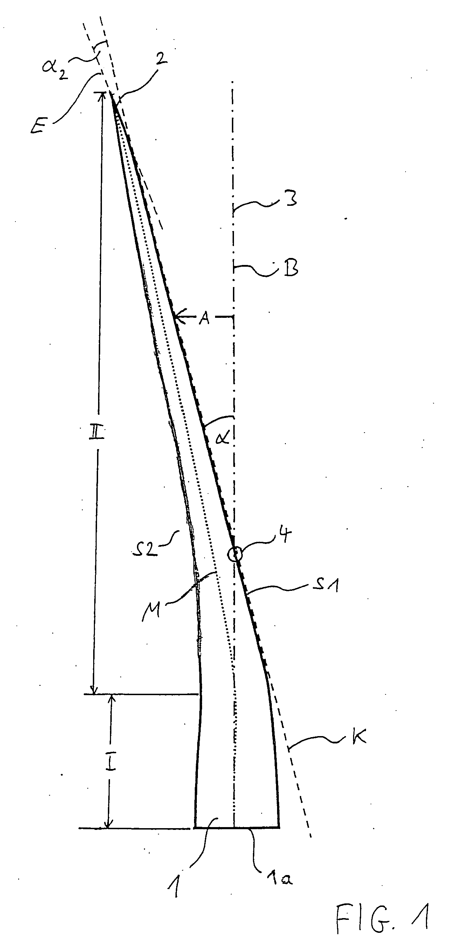

In Figur 1 ist ein erfindungsgemäßes Rotorblatt 1 dargestellt. Das Rotorblatt 1 weist einen von der Blattwurzel 1a ausgehenden ersten Längsabschnitt I und einen an den ersten Längsabschnitt I anschließenden, in eine Blattspitze 2 mündenden zweiten Längsabschnitt II auf. Im dargestellten Beispiel beträgt die Länge des ersten Längsabschnitts I etwa 20 % der Gesamtlänge des Rotorblatts 1 und die Länge des zweiten Längsabschnitts II etwa 80 % der Gesamtlänge des Rotorblatts 1. Dabei nimmt die Blattspitze 2 eine Länge von etwa 5 % der Gesamtlänge des Blatts 1 ein und ist ein Teil des zweiten Längsabschnitts II.

Das Rotorblatt 1 besitzt eine erste, dem Turm einer Windkraftanlage im Betrieb zugewandte erste Oberfläche S1 und eine zweite, dem Turm im Betrieb abgewandte Oberfläche S2. Die Längsachse 3 des ersten Längsabschnitts I spannt bei einer im Betrieb erfolgenden Rotation des Blatts 1 um die Drehachse eines das Blatt 1 tragenden Rotors eine Bezugsebene B auf, die senkrecht zu der Zeichenebene auf der Längsachse 3 des ersten Längsabschnitts I liegt.

Bei einer Rotation des Blatts 1 im Betrieb spannt die erste Oberfläche S1 im Bereich des zweiten Längsabschnitts II eine Konusebene K auf, die in der dargestellten Figur 1 ebenfalls senkrecht zu der Zeichenebene liegt. Die Konusebene K schneidet die Bezugsebene B unter einem spitzen Winkel α in einer Schnittlinie 4, die im dargestellten Beispiel aus der Zeichenebene herausragt. Dabei liegt die Schnittlinie 4 in Längserstreckung des Rotorblatts 1 gesehen in der der Blattwurzel 1a zugewandten Hälfte des Rotorblatts 1.

Der Abstand A zwischen der ersten Oberfläche S1 und der Bezugsebene B nimmt entlang des zweiten Längsabschnitts II in Richtung der Blattspitze 2 linear zu. Der Abstand A wird dabei in einer von dem Turm der Anlage wegzeigenden Richtung gemessen. So hat die erste Oberfläche S1 in dem ausgehend von der Schnittlinie 4 zur Blattwurzel 1a gerichteten Abschnitt des ersten Längsabschnitts I einen negativen Abstand A zu der Bezugsebene B. Der Abstand A nimmt in Richtung der Blattspitze 2 linear zunächst bis auf Null in der Schnittlinie 4 und dann oberhalb der Schnittlinie 4 zu positiven Abstandswerten zu.

Im Bereich der Blattspitze 2 nimmt der Abstand A zwischen der ersten Oberfläche S 1 des Rotorblatts 1 und der Bezugsebene B stärker zu, als im Bereich des übrigen zweiten Längsabschnitts II. Im dargestellten Ausführungsbeispiel steigt der Abstand A im Bereich der Spitze 2 weiter linear an. Eine gedachte, an die Blattspitze 2 angelegte Ebene E schneidet die Konusebene K unter einem spitzen Winkel α2.

In Figur 1 punktiert dargestellt ist die Konturmittelebene M des Rotorblatts 1, die senkrecht zur Zeichenebene steht. Die Konuturmittelebene M muss nicht zwangsläufig über die gesamte Längserstreckung des Rotorblatts 1 auf der dem Turm abgewandten Seite der Bezugsebene B liegen. Sie kann die Bezugsebene B auch schneiden und einen Teilverlauf auf der dem Turm zugewandten Seite der Bezugsebene B besitzen, um die Momente an der Achse zu reduzieren. Dieser Teilbereich kann insbesondere im Bereich des ersten Längsabschnitts I vorliegen.

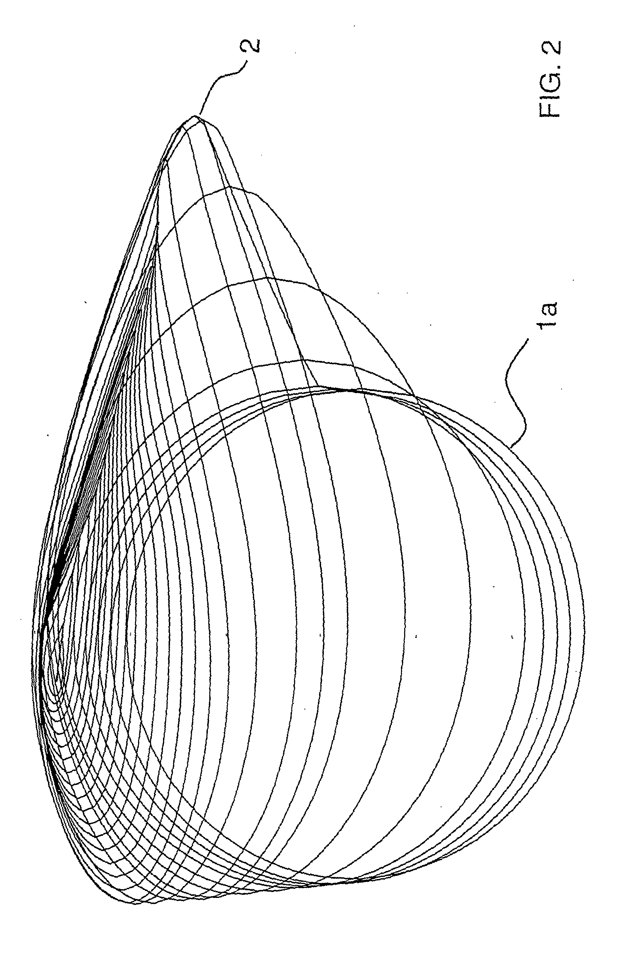

In Figur 2 ist eine Profilgeometrie anhand von Querschnitten durch das Rotorblatt 1 dargestellt. Es ist eine Ansicht senkrecht zu der Bezugsebene B gezeigt. Dabei ist ausgehend von der Blattwurzel 1a das Abknicken des zweiten Längsabschnitts II von dem ersten Längsabschnitt I und das Münden des zweiten Längsabschnitts II in die Blattspitze 2 zu erkennen.

Das erfindungsgemäße Rotorblatt 1 stellt aufgrund seiner Geometrie auch bei einer starken Windbelastung des Blatts 1 im Betrieb jederzeit einen ausreichenden Turmfreigang sicher. Gleichzeitig kann das Profil der ersten Oberfläche S 1 sehr gut an die aerodynamischen Anforderungen angepasst werden, so dass mit dem erfindungsgemäßen Rotorblatt 1 eine erhöhte Effizienz erreicht werden kann. Darüber hinaus kann durch die erfindungsgemäße Geometrie das Auftreten von unerwünscht starken Momenten um die Blattlängsachse vermieden werden. Dies entlastet ein Lager einer Blattwinkeleinstellregelung.

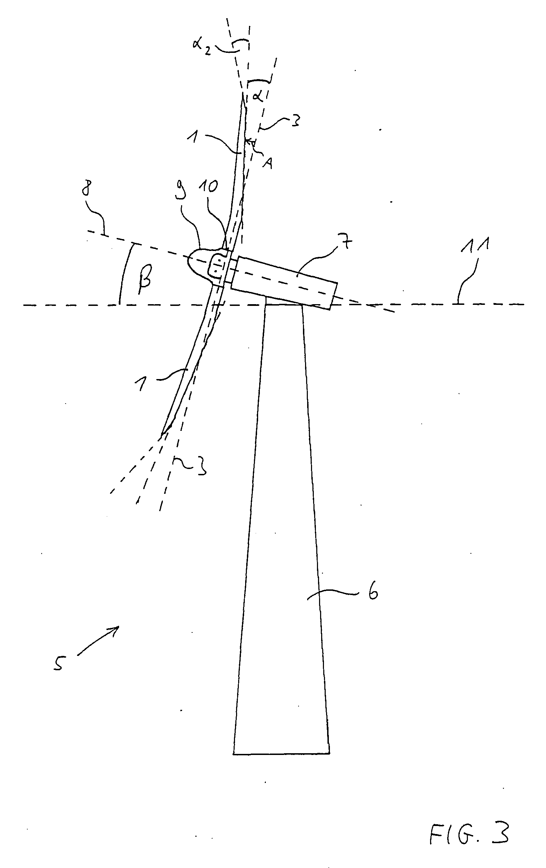

In Figur 3 ist eine erfindungsgemäße Windkraftanlage 5 dargestellt. Sie weist einen Turm 6 auf, der an seinem oberen Ende eine Gondel 7 trägt. An der Gondel 7 ist ein um eine Drehachse 8 drehbar gelagerter Rotor 9 vorgesehen. Der Rotor weist eine Rotornabe 10 auf, an der im vorliegenden Beispiel zwei der in Figur 1 dargestellten Rotorblätter 1 befestigt sind. Ein Konuswinkel der Nabe ist nicht dargestellt. Gleiche Bezugszeichen wie in Figur 1 bezeichnen gleiche Gegenstände. Die Windkraftanlage 5 gemäß dem dargestellten Ausführungsbeispiel kann darüber hinaus mit einer nicht näher dargestellten Blattwinkeleinstellregelung ausgestattet sein.

Zwischen den Längsachsen 3 der ersten Längsabschnitte I der Rotorblätter 1 und der Drehachse 8 des Rotors 9 besteht im dargestellten Beispiel jeweils ein Winkel von 90°. Auf diese Weise werden die Belastungen des Rotors und der Gondel im Betrieb minimiert. Darüber hinaus weist die Drehachse 8 des Rotors 9 gegenüber der Horizontalen 11 einen Winkel β auf. Die Rotorblätter 1 sind also um den Winkel β derart verkippt, dass sie in ihrer unteren Rotationsposition einen größeren Abstand von dem Turm 6 aufweisen, als in ihrer oberen Rotationsposition. Auf diese Weise kann der Winkel α der Vorverschiebung des zweiten Längsabschnitts II geringer gewählt werden, wodurch die Effizienz der Anlage erhöht wird.

Es wird darauf hingewiesen, dass die in den Figuren gezeigten Abmessungen der Anlagenkomponenten und die Größe der jeweiligen Winkel lediglich schematisch dargestellt sind und insbesondere keine maßstabsgetreue Darstellung sind.

## Patentansprüche

1. Rotorblatt (1) für eine Windkraftanlage (5),
- mit einer Blattwurzel (1a),
- mit einem von der Blattwurzel (1a) ausgehenden ersten Längsabschnitt (I),
- mit einem an den ersten Längsabschnitt (I) anschließenden, in eine Blattspitze (2) mündenden zweiten Längsabschnitt (II),
- mit einer ersten, einem Turm (6) der Windkraftanlage (5) im montierten Zustand zugewandten Oberfläche (S1) und einer zweiten, von dem Turm (6) der Windkraftanlage (5) im montierten Zustand abgewandten Oberfläche (S2),
- wobei eine gedachte Bezugsebene (B) aufgespannt ist durch eine im Betrieb des Rotorblatts (1) erfolgende Rotation der Längsachse (3) des ersten Längsabschnitts (I) um die Drehachse (8) eines das Rotorblatt (1) tragenden Rotors (9) der Windkraftanlage (5),
**dadurch gekennzeichnet,**
- **dass** die erste Oberfläche (S1) im Bereich des zweiten Längsabschnitts (II) entlang einer gedachten Konusebene (K) verläuft, die durch eine im Betrieb erfolgende Rotation der ersten Oberfläche (S1) im Bereich des zweiten Längsabschnitts (II) um die Drehachse (8) eines das Rotorblatt (1) tragenden Rotors (9) aufgespannt ist, wobei die Konusebene (K) unter einem Winkel (α) die Bezugsebene (B) schneidet,
- **dass** der Abstand (A) zwischen der ersten Oberfläche (S1) und der Bezugsebene (B) entlang des zweiten Längsabschnitts (II) in Richtung der Blattspitze (2) linear zunimmt und,
- **dass** der zweite Längsabschnitt (II) länger ist als der erste Längsabschnitt (I).

2. Rotorblatt nach Anspruch 1, **dadurch gekennzeichnet, dass** der Winkel (α), unter dem die Konusebene (K) die Bezugsebene (B) schneidet, ein spitzer Winkel ist.

3. Rotorblatt nach Anspruch 1 oder 2, **dadurch gekennzeichnet, dass** die Länge des zweiten Längsabschnitts (II) mehr als 60 % der Gesamtlänge des Rotorblatts (1) beträgt.

4. Rotorblatt nach einem der Ansprüche 1 bis 3, **dadurch gekennzeichnet, dass** die Länge des zweiten Längsabschnitts (II) etwa 80 % der Gesamtlänge des Rotorblatts (1) beträgt.

5. Rotorblatt nach Anspruch 4, **dadurch** gekenzeichnet, dass die Länge des ersten Längsabschnitts (I) etwa 20 % der Gesamtlänge des Rotorblatts (1) beträgt.

6. Rotorblatt nach einem der voranstehenden Ansprüche, **dadurch gekennzeichnet, dass** im Bereich der Blattspitze (2) der Abstand (A) zwischen der ersten Oberfläche (S1) des Rotorblatts (1) und der Bezugsebene (B) stärker zunimmt, als im Bereich des übrigen zweiten Längsabschnitts (II).

7. Rotorblatt nach Anspruch 6, **dadurch gekennzeichnet, dass** die Länge der Blattspitze (2) etwa 5 % der Gesamtlänge des Rotorblatts (1) beträgt.

8. Rotorblatt nach einem der voranstehenden Ansprüche, **dadurch gekennzeichnet, dass** die Schnittlinie (4) zwischen der Konusebene (K) und der Bezugsebene (B) in Längserstreckung des Rotorblatts (1) gesehen in der der Blattwurzel (1a) zugewandten Hälfte des Rotorblatts (1) liegt.

9. Rotorblatt nach einem der voranstehenden Ansprüche, **dadurch gekennzeichnet, dass** der Winkel zwischen der Längsachse (3) des ersten Längsabschnitts (I) und der Drehachse (8) eines das Rotorblatt (1) im Betrieb tragenden Rotors (9) 90° beträgt.

10. Windkraftanlage (5) mit einem Turm (6) und einer auf dem oberen Ende des Turms (6) vorgesehenen Gondel (7) mit einem um eine Drehachse (8) drehbar gelagerten, mindestens eine Rotornabe (10) aufweisenden Rotor (9), **dadurch gekennzeichnet, dass** an der Rotornabe (10) mindestens ein Rotorblatt (1) nach einem der Ansprüche 1 bis 9 angeordnet ist.

11. Windkraftanlage nach Anspruch 10, **dadurch gekennzeichnet, dass** die Drehachse (8) des Rotors (9) gegenüber der Horizontalen (11) einen Winkel (β) aufweist.
